# EUROPEAN PATENT SPECIFICATION

(11) **EP 0 509 865 B1**
(45) Date of publication and mention of the grant of the patent: **08.01.1997**
(21) Application number: 92400874.1
(22) Date of filing: 27.03.1992
(51) Int. Cl.: B60N 2/22

(54) **Emergency lock mechanism for vehicular seat**
Sicherheitsschliessmechanismus für Fahrzeugsitze
Mécanisme de fermeture de secours pour un siège de véhicule

(30) Priority: 29.03.1991 JP 20139/91; 28.06.1991 JP 159036/91; 30.09.1991 JP 79254/91; 29.11.1991 JP 98850/91
(43) Date of publication of application: 21.10.1992
(73) Proprietor: FUJIKIKO KABUSHIKI KAISHA, Tokyo 103 (JP)
(72) Inventor: Yamamura, Mitsuji, c/o Fujikiko K.K., Kosai-shi, Shizuoka-ken (JP); Kino, Keisuke, c/o Fujikiko K.K., Kosai-shi, Shizuoka-ken (JP); Kawashima, Hatsuo, c/o Fujikiko K.K., Kosai-shi, Shizuoka-ken (JP)
(74) Representative: Hasenrader, Hubert

(56) References cited:
- EP-A- 0 116 964
- DE-A- 2 449 436
- DE-A- 2 708 461
- DE-A- 3 027 629
- DE-A- 3 521 730
- FR-A- 2 195 948
- FR-A- 2 205 011
- FR-A- 2 205 132
- FR-A- 2 521 413
- FR-A- 2 649 942
- GB-A- 1 046 893
- GB-A- 1 077 081
- GB-A- 1 193 971
- GB-A- 2 117 440
- US-A- 4 765 680

## Description

### Background of the Invention

### Field of the Invention

This invention relates to an emergency lock mechanism for locking, in an emergency, the rotation of a hinged side of a seatback of a vehicular seat equipped with a seat reclining device which locks only the other side of the seatback with respect to the seat cushion of the seat.

### Description of the prior art

In the art, a seat reclining device for reclining a seatback of a vehicular seat with respect to a seat cushion of the seat, equipped with a latch mechanism of several shifts and/or a mechanism of free shifts, is known. The seat reclining device equipped with the latch mechanism of the several shifts causes the seatback to recline in several or finite positions by rotating the seatback and causing teeth of an upper tooth member mounted on the seatback to engage teeth of a lower tooth member secured to the seat cushion. The seat reclining device equipped with the free shift mechanism causes the seatback to recline in free- or multi-positions by rotating two engaged gears mounted on rotary shafts respectively secured to the seatback and the seat cushion.

In the vehicular seat equipped at one side with the above-mentioned reclining device which locks the side of the seatback, namely, a one-side locking seat reclining device, the other side of the seatback is hinged, and therefore, the seatback may be twisted in an emergency that an impulsive load is caused on the vehicle.

In an emergency that the vehicle starts suddenly, or comes into collision, an impulsive load is caused on the seatback through a passenger and it displaces the hinged side of the seatback backward or forward, or causes a torsional deformation of the seatback, which may hazard the passenger.

DE-A-2 708 461 discloses an emergency lock mechanism attachable to a vehicular seat of which a seatback is locked at one side by a seat reclining device and hanged at the other side with respect to a seat cushion for locking rotation of the hinged side of the seatback subject to a minimum deceleration, comprising an upper tooth member co-operating with a lower tooth member constituted of a single or double element.

FR-A-2 195 948 sets forth a security lock device for locking a reclining seatback of a vehicular seat comprising a first fitting part rigidly fixed to the seat and a second fitting part fixed to the seatback, the second fitting part is hinged and able to be immobilized with respect to the first fitting part by a ratchet mechanism; the security lock device comprising a rotational axis driven with the swivelling of the second fitting part, on which at least a locking wheel is mounted, said locking wheel engaging a pawl moved by inertia. In this document a pendular body and intermediate elements are used to move the pawl.

US-A-4 765 680 (corresponding to the preamble of claim 1) discloses an emergency lock mechanism attachable to a vehicular seat of which a seatback is locked at one side by a seat reclining device and hinged at the other side with respect to a seat cushion for locking rotation of the hinged side of the seatback subject to an impulsive load in an emergency, comprising:
- at least a lower tooth member attachable to the seat cushion and having engaging teeth;
- at least an upper tooth member provided with teeth for facing and engaging the teeth of the lower tooth member;
- an arm rotatably provided with respect to the lower tooth member; and
- a member disposed adjacent to the upper tooth member. This member normally separates the two upper tooth members so that they do not interfere. In this document the emergency lock mechanism is incorporated in the seat reclining device and the use of the mutually engaging teeth occurs both in an emergency and in the fine adjustment of the reclining angle. In order to get a safer lock mechanism, this one should not be incorporated in the seat reclining device and it should operate only in an emergency.

The object of the present invention is therefore to overcome the above-mentioned drawbacks and provide an emergency lock mechanism for locking the hinged side of the seatback when the seatback is subject to am impulsive load.

### Summary of the Invention

The emergency lock mechanism of the present invention is to be attached to a vehicular seat of which a seatback is locked at one side by a seat reclining device and hinged at the other side with respect to a seat cushion, for locking the rotation of the hinged side of the seatback subjected to an impulsive load in an emergency. The emergency lock mechanism comprises a lower tooth member attachable to the seat cushion at the hinged side and having engaging teeth, an upper tooth member provided for rotating with reclining of the seatback and having engaging teeth for facing and engaging the teeth of the lower tooth member, an arm rotatably provided, with respect to the seat cushion, and a limiting member disposed adjacent to the upper tooth member, for normally preventing the upper tooth member from engaging the lower tooth member, the limiting member being moved by rotation of the arm in the emergency to allow the upper and lower tooth members to engage each other.

According to this configuration, the arm attached to the hinged side of the seatback rotates when subject to the impulsive load in an emergency, and the arm causes the limiting member to move away from the normal position, where the limiting member prevents the upper tooth member from engaging the lower tooth member, to the emergency position where the upper and lower tooth members engage each other to lock the rotation of the hinged side of the seatback.

### Brief Description of the Drawing

Fig. 1 is a perspective view of a vehicular seat equipped with a one-side locking seat reclining device and an emergency lock mechanism of the present invention.

Fig. 2 is an exploded view of a first embodiment of the emergency lock mechanism.

Fig. 3 is a front view of the emergency lock mechanism of Fig. 2, showing the unlocked state of the mechanism.

Fig. 4 is a front view of the lock mechanism of Fig. 2, showing the mechanism in the locked state.

Fig. 5 is a front view of a second embodiment of the emergency lock mechanism, showing the mechanism in the unlocked state.

Figs. 6-8 are respectively a front view of an upper tooth member, a limiting member, and an arm of the mechanism of Fig. 5.

Fig. 9 is a front view showing a modified example of the mechanism of Fig. 5.

Fig. 10 is a front view of a third embodiment of the emergency lock mechanism, showing the mechanism in the unlocked state.

Fig. 11 is a sectional side view along the cutting line XI-XI in Fig. 10.

Figs. 12-15 are respectively front views of an upper tooth member, a limiting member, an acting member, and an arm of the lock mechanism shown in Figs. 10 and 11.

Fig. 16 is a front view of the lock mechanism in Figs. 10 and 11, showing the mechanism in the locked state.

Fig. 17 is a front view of a fourth embodiment of the emergency lock mechanism, showing the mechanism in the unlocked state.

Fig. 18 is a front view of the lock mechanism of Fig. 17, showing the mechanism in the locked state.

Fig. 18b is a front view showing a modified example of the lock mechanism of Figs. 17 and 18.

Fig. 19 is a front view of a fifth example of the emergency lock mechanism, showing the mechanism in the unlocked state.

Fig. 20 is a sectional side view along the cutting line XX-XX in Fig. 19.

Fig. 21 is a front view of the lock mechanism, showing the mechanism in the locked state.

Fig. 22 is a perspective view of a device for manually releasing the locking state of the mechanism.

Fig. 23 is a front view of a fifth embodiment of the emergency lock the unlocked state.

Fig. 24 is a front view of the lock mechanism of Fig. 23, showing the mechanism in the locked state.

Fig. 25 is a front view of a sixth embodiment of the emergency lock mechanism, showing the mechanism in the unlocked state.

Fig. 26 is a side view of the lock mechanism, taken in the direction of the arrow XXVI in Fig. 25.

Fig. 27 is a front view of the lock mechanism, showing the mechanism in the locked state.

Fig. 28 is a front view of a seventh embodiment of the emergency lock mechanism, showing the mechanism in the unlocked state.

Fig. 29 is an exploded view of the lock mechanism of Fig. 28.

Fig. 30 is a front view of the lock mechanism of Figs. 28 and 29, showing the mechanism in the locked state.

Fig. 31 is a front view showing a modified example of the lock mechanism of Figs. 28 and 29.

Fig. 32 is a front view showing another modified example of the lock mechanism of Figs. 28 and 29.

### Description of the Preferred Embodiments

The present invention will now be explained in detail through embodiments, with reference to the accompanying drawings.

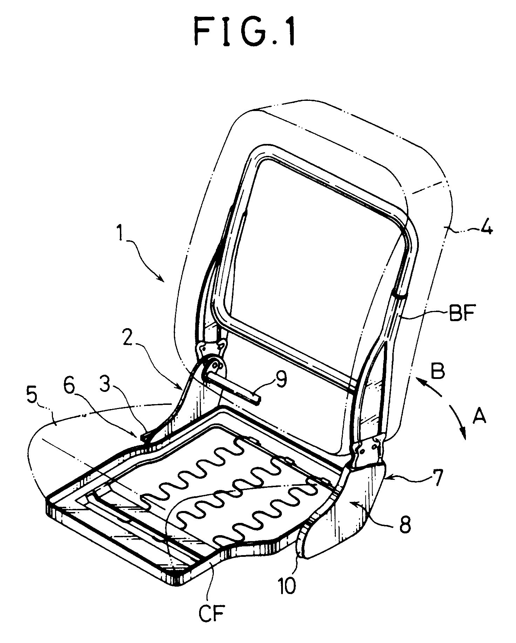

Fig. 1 shows a vehicular seat 1, provided with a one-side locking seat reclining device 2. By handling an operating lever 3 of the seat reclining device 2, a seatback 4 is reclined with respect to a seat cushion 5 of the seat 1. The seat reclining device 2 connects a seat cushion frame CF which supports the seat cushion 5, and a seatback frame BF which supports the seatback 4 so that the seatback frame BF can recline with respect to the seat cushion frame CF.

The seat reclining device 2 is attached to one side 6 of the seat frames CF, BF, while an emergency lock mechanism 8 of the present invention is attached to the other side 7 of the seat frames CF, BF through a base plate 10. The seat reclining device 2 and the emergency lock mechanism 8 are linked by a hollow connecting rod 9.

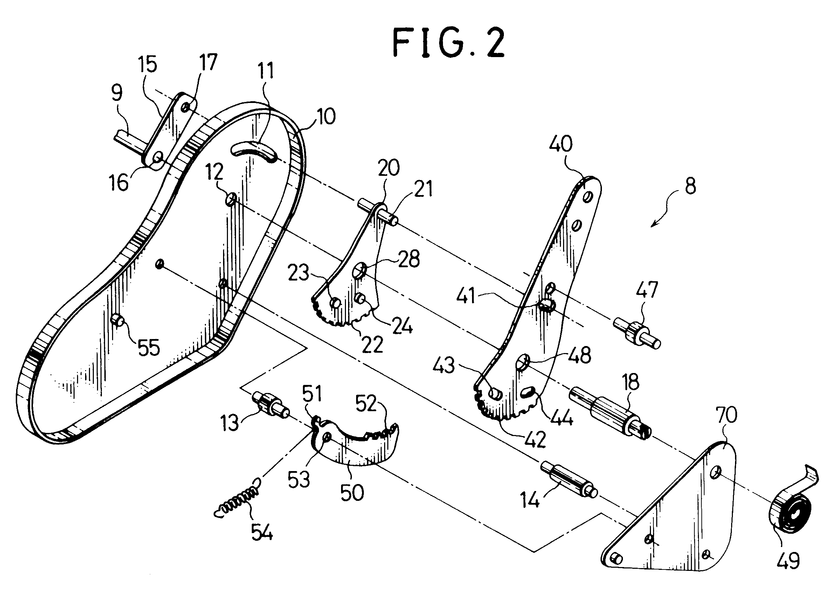

Figs. 2-4 shows a first embodiment of the emergency lock mechanism 8. The base plate 10 of the seat 1 is formed with coaxial arc-shaped hole 11 and aperture 12 below the arc-shaped hole 11 at an upper part and provided with pins 13, 14 at a central part, and is secured to the left side of the seat cushion frame CF so that the connection rod 9 of the seat reclining device 2 and the aperture 12 of the base plate 10 are aligned. A link 15 is attached to the connection rod 9 so as to rotate with the connection rod 9, entered around an axis of the rod 9 when the seatback is reclined. A distance on center between a hole 16 of the connection rod 9 and a hole 17 formed in an free end of the link 15, is equal to the radius of the arc hole 11, that is, a distance on center between the arc hole 11 and the aperture 12.

The emergency lock mechanism 8 mainly consists of an upper tooth member 20, an arm 40 and a lower tooth member 50. The upper tooth member 20 is provided with an upper pin 21 and a pair of lower pins 23, 24, and is formed with coaxial central hole 28 and lower arc-shaped teeth 22. The upper pin 21 penetrates the upper tooth member 20 and extends backward and forward. A distance on center between the pin 21 and the central hole 28 is the same as that between the holes 16 and 17. The pins 23, 24 are provided on a coaxial arc on a frontal surface of the upper tooth member 20 with respect to the central hole 28.

The arm 40 is attachable to one side 7 (Fig. 1) of the seatback 4 or seatback frame BF through holes formed in an upper part by screws (not shown) or the like. The arm 40 is formed with coaxial upper arc-shaped hole 41, lower arc-shaped holes 43, 44, round hole 48 between the upper arc-shaped hole 41 and the lower arc holes 43, and lower arc-shaped teeth 42 which are shaped as same as the lower arc-shaped teeth 22 of the upper tooth member 20. A distance on center between the upper arc-shaped hole 41 and the round hole 48 is the same as that between the upper pin 21 and the central hole 28 of the upper tooth member 20, while a distance on center between the round hole 48 and the lower arc-shaped holes 43, 44 is the same as that between the central hole 28 and the lower pins 23, 24 of the upper tooth member 20. The arm 40 is also provided with a pin 47 above the upper arc hole 41.

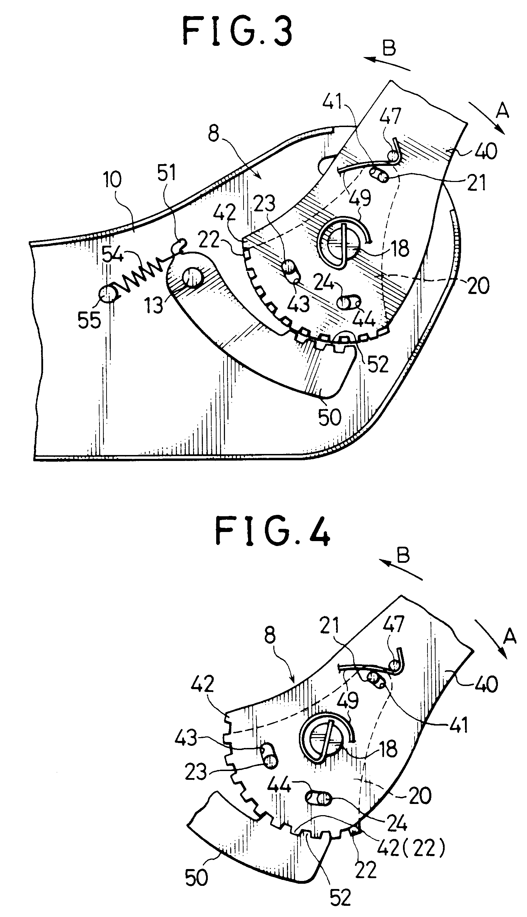

The arm 40 is superimposed on the upper tooth member 20 so that the upper pin 21 and lower gins 23, 24 of the upper tooth member 20 respectively come in the upper arc-shaped hole 41 and the lower arc-shaped holes 43, 44 of the arm 40. In this state, each tooth 42 of the arm 40 is normally positioned between the arc-shaped teeth 22 of the upper tooth member 20 as shown in Fig. 3.

An assembly of the upper tooth member 20 and the arm 40 is attachable to the vehicular seat 1 by means of a fixing pin 18 which passes through the hole 48 of the arm 40, the hole 28 of the upper tooth member 20, and the aperture 12 of the base plate 10 and is inserted and secured in the hole 16 of the connecting rod 9 of the seat reclining device. The upper pin 21 of the upper tooth member 20 is passed through the arch hole 11 of the base plate 10 and secured to the link 15 through the hole 17 so that the upper tooth member 20 can rotate with the connecting rod 9 and the fixing pin 18 about the axis of the connecting rod when the seatback 4 is reclined. An upper part of the arm 40 is to be fixed to the side 7 of the seatback 4, and the arm 40 is hinged, centered around the fixing pin 18. Hence, the arm 40 also rotates with the upper tooth member 20 when the seatback 4 is reclined.

A lower tooth member 50 formed with an projection and a hole 53 at a proximal end and having teeth 52 at one side of a distal end, is rotatably mounted on the base plate 10 through the hole 53 and the pin 13 of the base plate 10. The teeth of the lower tooth member 50 face the teeth 22 and 42 of the upper tooth member 20 and the arm 40 and are shaped as same as teeth 22 and 42 of the upper tooth member 20 and the arm 40. The thickness of the teeth 52 of the lower tooth member 50 is about total thickness of the teeth 22 and 42 of the upper tooth member 20 and the arm 40. A tension spring 54 is stretched between the projection 51 of the lower tooth member 50 and a pin 55 mounted on the base plate 10, and the lower tooth member 50 is energized to pivot in the counterclockwise direction B, centered around the pin 13 by means of the tension spring 54. Hence, the teeth 52 of the lower tooth member 50 is pressed against the arc-shaped engaging teeth 22 and 42 of the upper tooth member 20 and the arm 40 as shown in Fig.3. In this state, the engaging teeth 52 of the lower tooth member 50 can not engage with the engaging teeth 22 and 42 since the teeth 42 of the arm 40 are between the teeth 22 of the upper tooth member 20. The teeth 42 of the arm 40 act as a limiting member which normally prevent the lower tooth member 50 from engaging the upper tooth member 20.

A holder plate 70 for holding the main components 20, 40, 50 of the lock device 8 on the base plate 10 is secured to the base plate 10 through the fixing pin 18 and pins 13, 14 mounted on the base plate. The fixing pin 18 extends forward through the holder plate 70. A spring 49 is stretched between the pin 47 of the arm 40 and the fixing pin 18, and the arm 40 is energized to rotate in the counterclockwise direction B about the fixing pin 18.

When an impulsive load is caused on the seatback, for example, by a rear-end collision by a car, the hinged side 7 of the seatback or arm 40 pivots in the clockwise direction A, against the force of the spring 49, with the arc-shaped holes 41, 43, 44 being guided by the upper and lower pins 21, 23, 24 of the upper tooth member 20 until the opposite (right-side) edges of the arc holes 41, 43, 44 respectively contact the pin 21, 23, 24 of the upper tooth member as shown in Fig. 4. At the moment, the teeth of the arm is in an emergency position wherein the engaging teeth 22 and 42 superimpose each other, and therefore the engaging teeth 52 of the lower tooth member 50 engage the teeth 22 and 42 of the upper tooth member 20 and the arm 40 and locks the arm 40 or the hinged side 7 of the seatback 4 with respect to the seat cushion 5.

When the impulsive load is gone, the arm 40 pivots in the counterclockwise direction B, and returns to the original or normal position by means of the spring 49 since the teeth 22, 42 and 52 are so designed as to disengage each other when subjected to the rotating force.

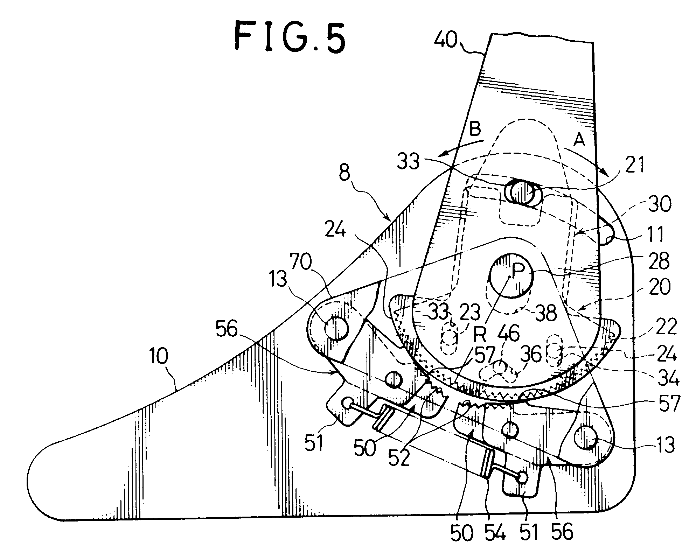

Figs. 5-9 show a second embodiment of the emergency lock mechanism. In the second embodiment, the same numerals and letters are used for elements which function the same as those of the first embodiment, and a further description for the elements is omitted.

The emergency lock mechanism 8 mainly consists of an upper tooth member 20, a cam follower plate 30 as a limiting member, an arm 40 provided with a cam pin 46, and a pair of lower tooth members 50, 50.

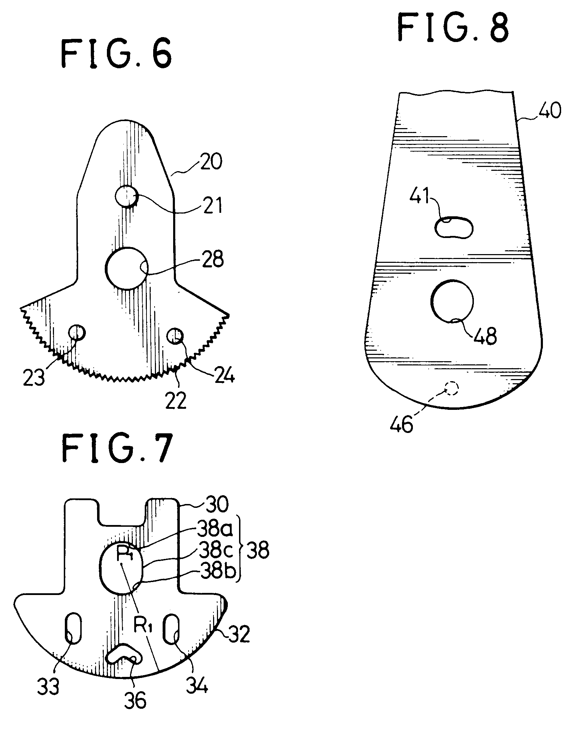

Fig. 6 shows the upper tooth member 20 which is a plate provided with an upper pin 21 and lower pins 23, 24 and has coaxial central hole 28 and arc-shaped engaging teeth 22. The radius of the arc-shaped teeth 22, or the distance from the center P of the central hole 28 to the tips of the arc-shaped teeth 22 is R as shown in Fig. 5.

Fig. 7 shows the cam follower plate 30 of which a lower edge 32 is in the shape of an arc. The cam follower plate 30 is formed with vertically elongated holes 33, 34 and 38, and a mountain-shaped hole 36 which act as a cam groove. The contour line of the hole 38 consists of upper and lower semi-circles 38a, 38b and vertical lines 38c. P1 is the center of the upper semi-circle 38a, and R1 is the radius of the arc-shaped lower edge 32. The radius R1 is slightly larger than the radius R of the upper tooth 20.

Fig. 8 shows the arm 40 which is a plate formed with coaxial round hole 48 and arc-shaped hole 41 above the round hole 48. The cam pin 46 for engaging the cam groove 36 of the cam follower plate 30 extends backward.

These three plates 20, 30, and 40 are superimposed one on top of the other, with the upper contour arcs of the holes 28, 38, and 48 of the upper tooth member 20, the cam follower plate 30, and the arm 40 being superimposed. In this case, the lower pins 23, 24 of the upper tooth member 20 come in the vertically elongated holes 33, 34 of the cam follower plate 30 from the back and the upper pin 21 come in the arc-shaped hole 41 of the arm 40, while the cam pin 46 of the arm 40 comes in the central part or the top of the mountain-shaped cam groove 36 of the cam follower plate 30 from the front. The arc-shaped lower edge 32 of the cam follower plate 30 is in a position slightly lower than that of the arc-shaped teeth 22 of the upper tooth member 20.

An assembly of the plates 20, 30, and 40 is attachable to the seat 1 by means of a fixing pin 18 which passes through the holes 48, 38, and 28 of the arm 40, the cam follower plate 30, and the upper tooth member 20 and is secured to a connecting rod 9 of a seat reclining device 2.

The lower tooth members 50, 50 are pivotably mounted on the base plate 10 through pivots 13, 13. Each lower tooth member 50 has a projection 51 at a lower part, engaging teeth 52 at an upper part, and a projected portion 56 disposed adjacent to the engaging teeth 52. The teeth 52 of the lower tooth member 50 face the teeth 22 of the upper tooth member 20, and an upper edge 57 of the projected portion 56 faces the arc-shaped lower edge 32 of the cam follower plate 30 and is in a position higher than that of the engaging teeth 52. A tension spring 54 is stretched between the projections 51 and 51 of the lower tooth members 50, 50, and the lower tooth members are energized to pivot towards the arc-shaped engaging teeth 22 of the upper tooth member 20, centered around the pivots 13, 13, by means of the tension spring 54. A holder plate 70 for holding the components 20, 30, 40, 50 of the emergency lock mechanism 8 on the base plate 10 is secured to the base plate 10.

When the arm 40 is in a normal position, the upper edges 57, 57 of the projected portions 56, 56 contact the arc-shaped lower edge 32 of the cam follower plate 30, thereby the lower tooth members 50, 50 can not engage the upper tooth member 20 as shown in Fig. 5.

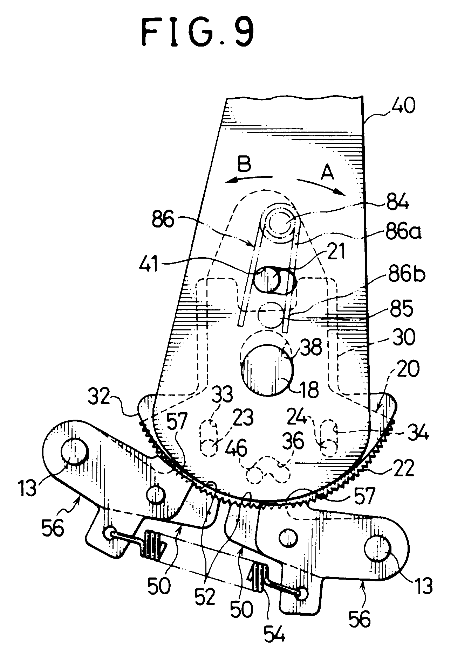

When the arm is subject to an impulsive load which causes the arm to pivot in the clockwise direction A, the cam pin 46 moves to the left in the cam groove 36 of the limiting member 30, lifting the limiting member 30 up to an emergency position wherein the lower semi-circle 38b of the vertically elongated hole 38 and the lower arcs of the vertically elongated holes 33, 34 of the limiting member 30 respectively contact the fixing pin 18, and the pin 23, 24 of the upper tooth member 20 as shown in Fig. 9.

When the impulsive load is gone, the arm 40 moves in the counterclockwise direction B and returns to the original or normal position by means of elastic return of the seatback frame BF, lowering the limiting member 30 which disengages the lower tooth member 50 from the upper tooth member 20.

In order to energize the arm 40 to return quickly to the original position, a spring 86 may be mounted on the arm 40 as shown by imaginary lines in Fig. 9. The configuration and function of the spring 86 is explained briefly. A pair of pins 84, 85 are mounted on the arm 40 at positions above and below the upper pin 21 of the upper tooth member 20, and the spring 86 is mounted on the pin 84 positioned above the upper pin 21. When the arm is in the emergency position, a lower portion 86b of a right-side wing of the plate spring 86 contacts the lower pin 85, and an upper portion 86a of a left-side wing of the spring 86 is pushed to the left by the pin 21 and energized to return to the right. When the impulsive load is gone, the arm 40 quickly returns to the original position by means of the energized left side wing of the spring 86.

When the arm 40 is subject to an impulsive load which causes the arm to pivot in the counterclockwise direction B, the limiting member 30 recedes away from the lower tooth member 50 in a manner similar to that described above.

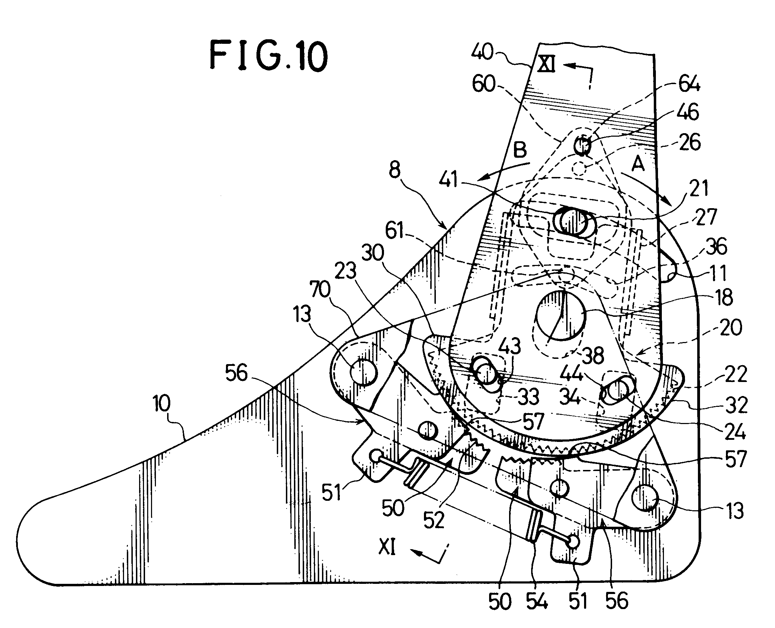

Figs. 10-16 show a third embodiment of the emergency lock mechanism. The emergency lock mechanism of this third embodiment is similar to those of the first and second embodiments, and therefor the same reference numerals and letters are used for elements which function the same as those in the first or second embodiment, and a further description for the elements is omitted.

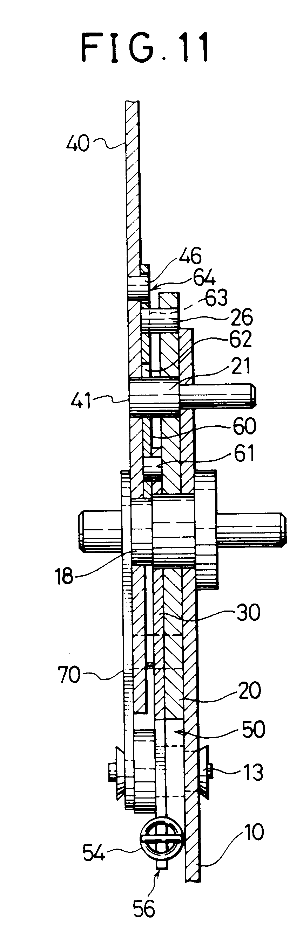

The emergency lock mechanism 8 mainly consists of an upper tooth member 20, a limiting member or cam follower plate 30, an intermediate link plate 60, an arm 40, and a pair of tooth members 50 as shown in Figs. 10 and 11.

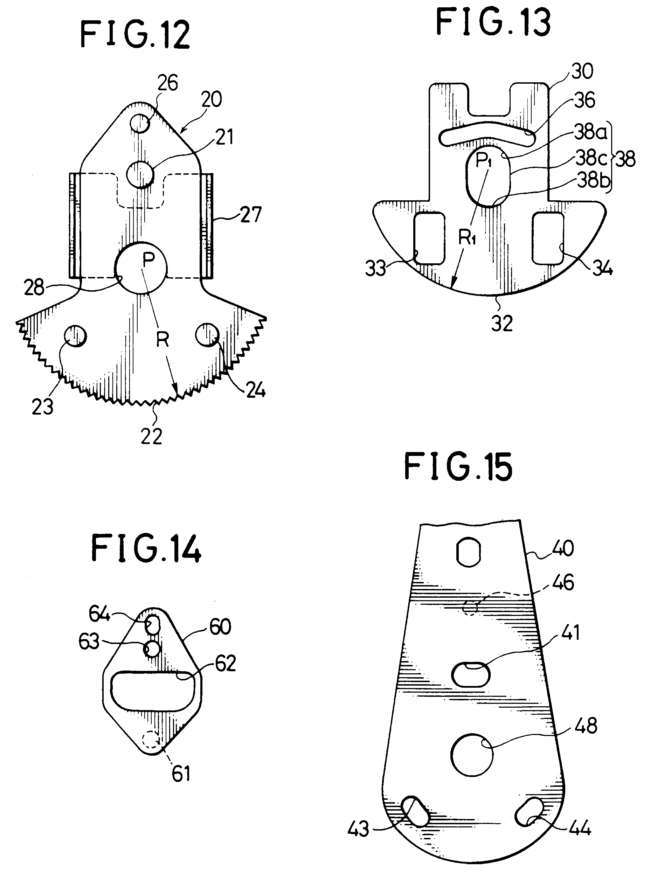

The upper tooth member 20 is similar to that of the second embodiment as shown in Fig. 12, and the difference is that it further has a pin 26 for engaging the intermediate link plate 60, and a guide plate for guiding the cam follower plate 30 when the cam follower plate 30 vertically moves. The upper tooth member 20 is secured to the link 15 of the seat reclining device 8 by means of an upper pin 21 as described above.

The cam follower plate 30 is also similar to that of the second embodiment as shown in Fig. 13. The difference is that a mountain-shaped cam groove 36 of the cam follower plate 30 is transversely elongated at an upper part, and a pair of lower holes are formed in the shape of a rectangle respectively.

The intermediate link plate 60 as holes 62, 63, 64 as shown in Fig. 14. The upper pin 21 of the upper tooth member 20 passes through the hole 62 of the intermediate link plate 60, and the hole 63 of the intermediate link plate 60 receives the pin 26 of the upper tooth member 20. The hole 64 receives a pin 46 of the arm 40 as shown in Figs. 10 and 11. The link plate 60 is provided with a cam pin 61 which extends backward. The cam pin 61 engages the mountain-shaped cam groove 36 of the cam follower plate 30.

The arm 40 has coaxial round hole 48 and arc-shaped holes 41, 43, 44 around the round hole 48 as well as the pin 46 as shown in Fig. 15. The arc-shaped holes 41, 43, 44 respectively receive the pins 21, 23, 24 of the upper tooth member 20.

The upper tooth member 20, the cam follower plate 30, the intermediate link plate 60, and the arm 40 are superimposed, in turn, one on top of the other. This assembly is to be attached to the connecting rod 9 of the seat reclining device 2 by a fixing pin 18 in a manner the same as that described above and shown in Fig. 2. The lower tooth members 50, 50 are pressed against the lower edge 32 of the limiting member 30 in a manner the same as that of the second embodiment. A holder plate 70 holds the main components 20, 30, 40, 50, 60 of the lock mechanism 8. This state is shown in Figs. 10 and 11. The main components are respectively in a normal position in this state.

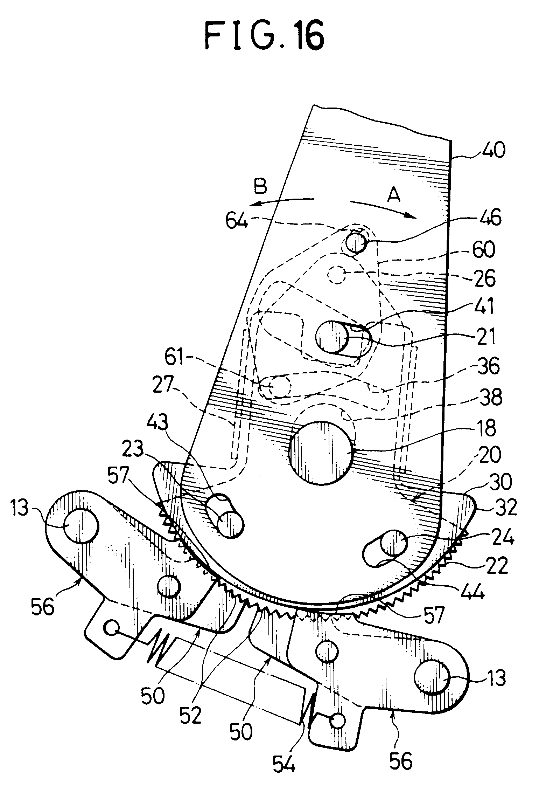

The operation of emergency lock mechanism 8 designed as described above and shown in Figs. 10 and 11, is now explained with reference to Fig. 16. When the seatback 4 is subject to an impulsive load which causes the arm 40 to pivot in the clockwise direction A, the pin 46 of the arm 40 causes the intermediate link plate 60 to rotate in the same direction around the pin 26 of the cam follower plate 20, and the cam pin 61 of the link plate 60 moves to the left along the mountain-shaped cam groove 36 of the limiting member 30, lifting the limiting member 30. Other operations of the emergency lock mechanism 8 are the same as those described in the second embodiment, and a further description is omitted.

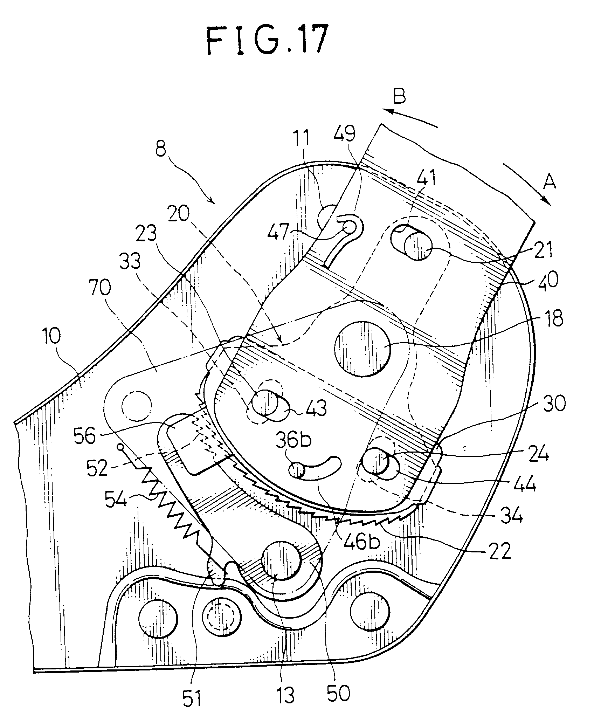

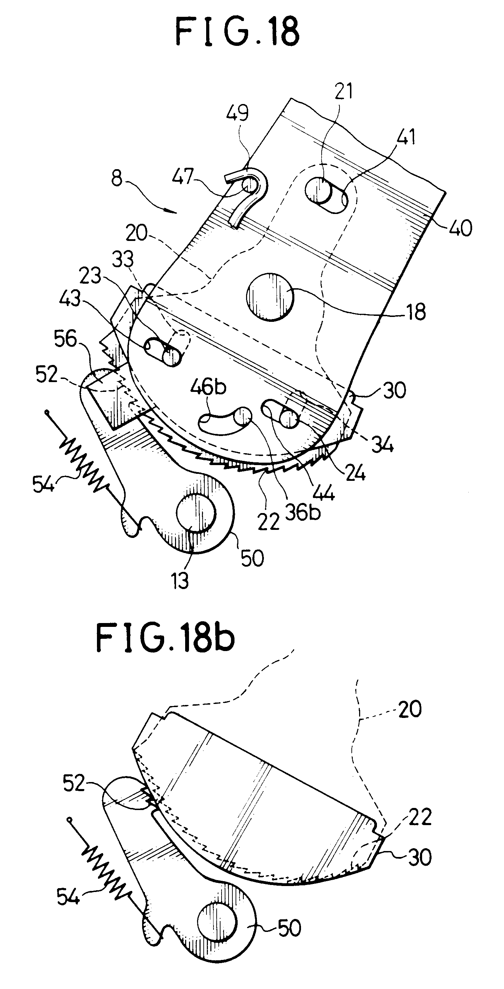

Figs. 17, 18, and 18b show a fourth embodiment of the emergency lock mechanism. In this embodiment, the same reference numerals and letters are used for elements which function the same as those of the above embodiments, and a further description for the elements is omitted.

The lock mechanism 8 mainly consists of an upper tooth member 20, a cam follower plate 30, an arm 40, and a lower tooth member 50. The lock mechanism 8 is to be mounted on the seat 1 as shown in Fig. 17 in a manner similar to that of the above embodiments.

A lower part of the arm 40 is formed with a cam groove 46b, and the cam follower plate 30 which acts as a limiting member, is provided with a cam follower pin 36 which cooperates with the arc-shaped cam groove 46b of the arm 40 to act as a cam.

A lower edge of the limiting member 30 is normally positioned higher than that of an arc-shaped teeth 22 of the lower tooth member 20.

When the arm 40 is subject to an impulsive load which causes the arm to pivot in the clockwise direction A, the cam groove 46b formed in the arm 40 rotates in the clockwise direction as shown in Fig. 18, and pushes the cam follower pin 36b upward. Hence, the limiting member 30 recedes away from a protecting portion 56 of the lower tooth member 50, and the lower tooth member 50 engages the upper tooth member 20 and locks the arm 40 with respect to the upper tooth member 20.

When the impulsive load is gone, the arm returns to the normal position by means of the spring 19 stretched between the pin 47 and the fixing pin 18 in a manner the same as that of the first embodiment, lowering the cam follower plate 30.

Fig. 18b shows a modified example of the fourth embodiment. In this example, the lower edge of the cam follower plate 30 is normally positioned lower than the engaging teeth 22 of the upper tooth member 20 and directly contacts the engaging teeth 52 of the lower tooth member 50 to prevent the lower and upper tooth members 50 and 20 from engaging each other. The cam follower plate 30 is lifted by the rotation of the arm 40 as described above to allow the lower and upper tooth members to engage each other.

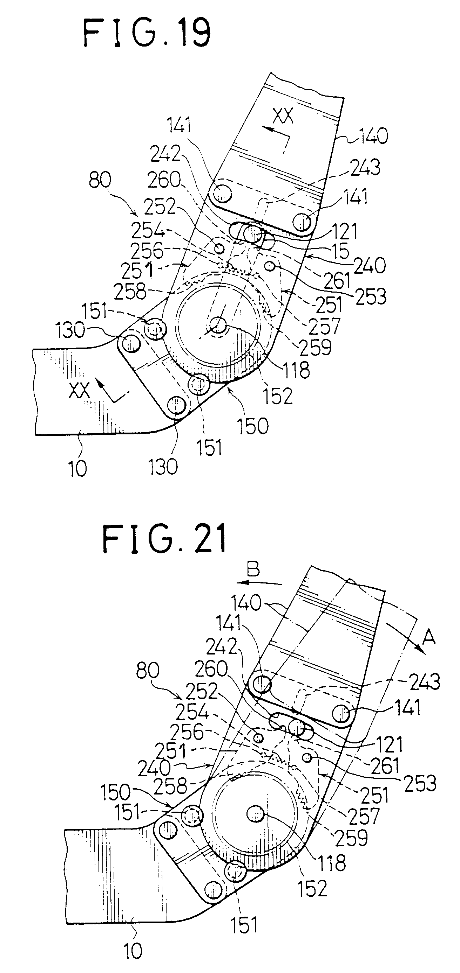

Figs. 19-24 show a fifth embodiment of the emergency lock mechanism. The lock mechanism 80 mainly consists of a pair of upper tooth members 251, 251, a fixed pin 121, an arm 140, and a lower tooth member 150, as shown in Figs. 19 and 20.

The lower tooth member 150 is to be secured to the base plate 10 by bolts 130 or the like. The lower tooth member 150 is provided with guide rollers 151 at a lower part. A toothed wheel 152 is attached to an upper part of the lower tooth member 150 by a fixing pin 118.

The arm 140 is connected to a lower member 240 by rivets 141 or the like. The arm 140 is mounted on the fixing pin 118 through the lower member 240 so as to position outside the toothed wheel 152 and pivot around the fixing pin 118 with respect to the fixed toothed wheel 152. The arm 140 is formed with an arc-shaped hole 242 centered around an axis of the fixing pin 118.

The upper tooth members 251, 251 are pivotably mounted on the arm 140 by pivots 252, 253. Each upper tooth member 251, 251 is formed with engaging teeth 258, or 259 at a lower end, and a cam surface 260, or 261 at an upper part. A tension spring 254 for energizing the upper tooth members 251, 251 to move toward the toothed wheel 152, is stretched between the upper tooth members 251 and 251 through pins 256, 257 attached to the upper tooth members 251, 251.

A pin 121 is secured to a link 15 of the connecting rod 9 (Fig. 20), so that the pin 121 moves with the seatback when it is reclined. When the seatback is in a normal position, the fixed pin 121 is positioned at the center of the arc-shaped hole 242 of the arm 140 and contacts the cam surfaces 260, 261 of the upper tooth members 251, 251 in order to prevent the upper tooth members from engaging the toothed wheel 152 of the lower tooth member 150 as shown in Fig. 19.

When the arm 140 is subject to an impulsive load in the counterclockwise direction B, the arm 140 is guided on the guide rollers 151, 151 and is rotated in the direction B, as shown by actual lines in Fig. 21. At that moment, the cam surface 260 of the upper tooth member 250 is withdrawn from contact with the fixed pin 121. Hence, the upper tooth member 251 rotates in the counterclockwise direction by means of the tension spring 254 and engages the toothed wheel 152 to lock the arm 140 with respect to the fixed toothed wheel 152.

When the impulsive load is gone, the arm 140 returns to the original position since the seatback frame BF (Fig. 1) resiles, and the fixed pin 121 is relatively positioned at the central part of the arc-shaped hole 242. Although the cam surface 260 contacts the pin 121, it can not come under the pin 121 since it extrudes upward. The upper tooth member 251 is, therefore, not disengaged from the toothed wheel 152.

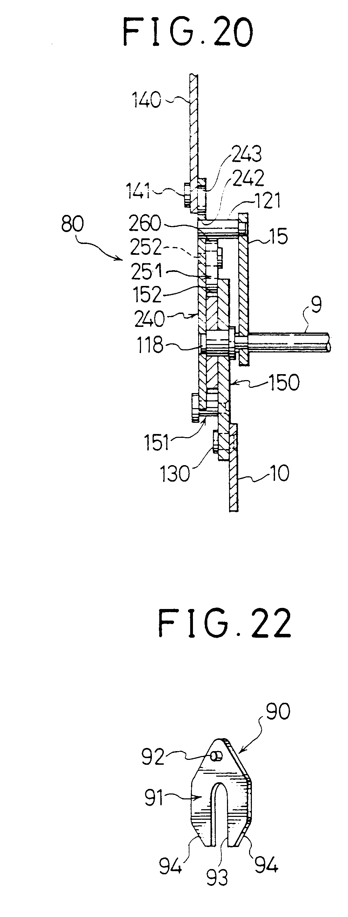

In order to disengage the upper tooth member 251 from the toothed wheel 152, a fork-shaped manual tool 90 shown in Fig. 22 may be used. The manual tool 90 has two branches 91 defining a groove 93 between them, and a projection 92 for engaging and sliding along a vertical groove 243 formed in the arm 140. A distal end of each branch has inclined surface 94, and is pointed. When the disengaging tool 90 is slid downward, the distal end or tip comes in between the cam surface 260 and the pin 121, and the inclined surface 94 pushes in the cam surface 260 under the pin 121.

When the arm 140 is subject to an impulsive load in the clockwise direction A, the arm 140 is guided on the guide rollers 151, 151 and is rotated in the direction A, as shown by imaginary lines in Fig. 21. In this case, the upper tooth member 251 engages the toothed wheel 152.

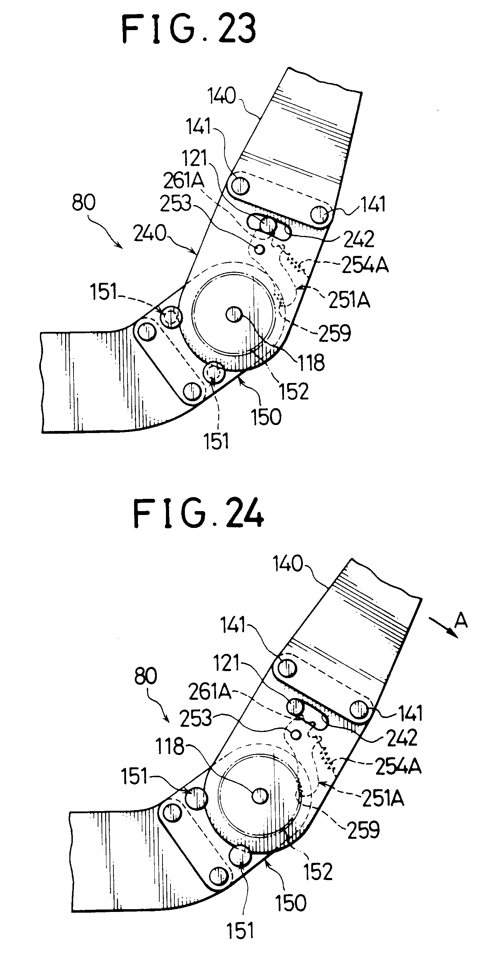

Figs. 23 and 24 show a modified example of the fifth embodiment. In this example, the emergency lock mechanism 80 have one upper tooth member 251A formed with a cam surface 261A at an upper end. The upper tooth member 251A is energized to move towards the toothed wheel 152, and the fixed pin 121 prevents the upper tooth member 251A from engaging the wheel 152. Fig. 23 shows the lock mechanism 80 in a normal position, while Fig. 24 shows the lock mechanism in an emergency position. As can be understood from the above description, the hinged arm 140 is locked only when an impulsive load in the clockwise direction A, is caused on the arm 140.

As described above, the fixed pin 121 and the cam surface 260, 261, 261A act as a limiting member which prevents the upper and lower tooth members from engaging each other.

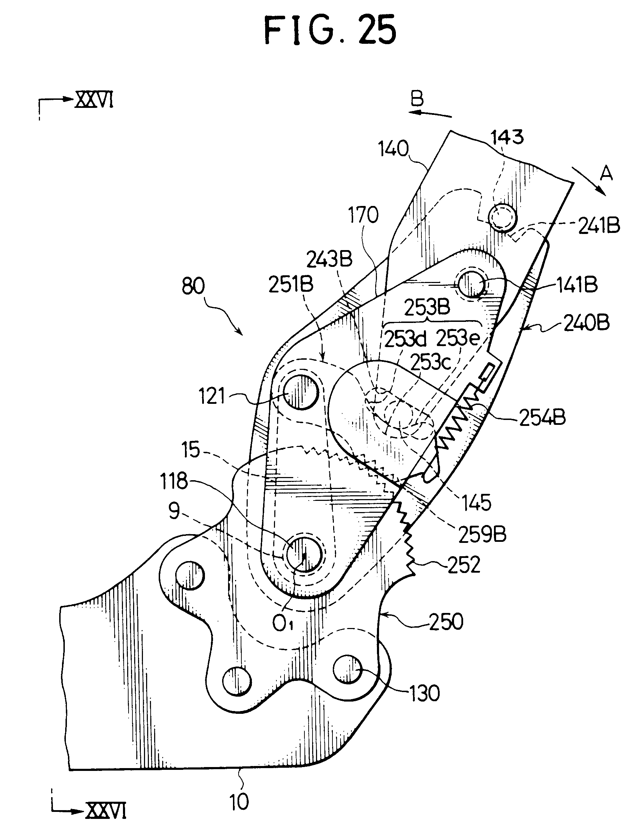

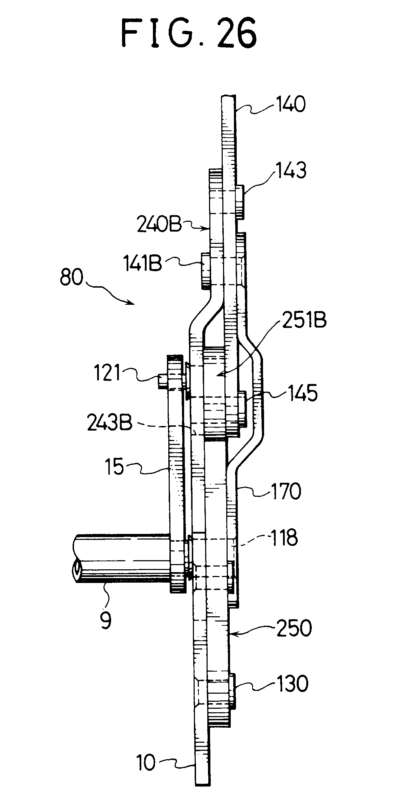

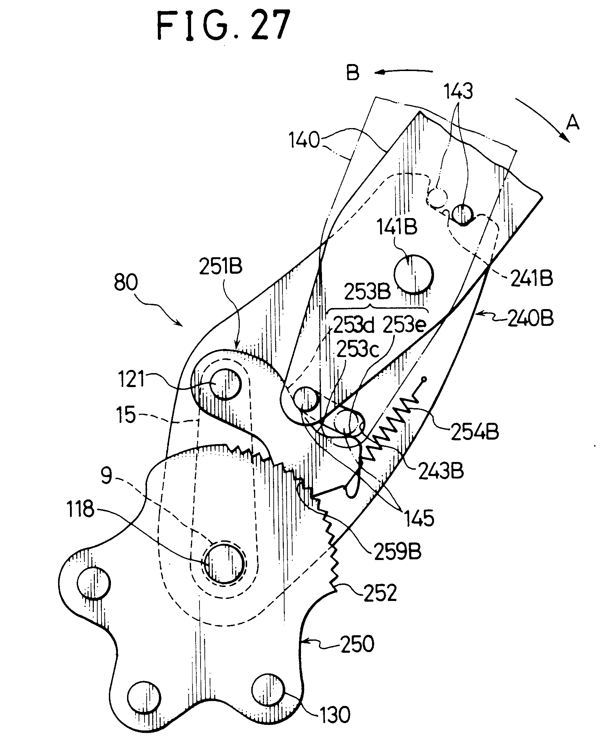

Figs. 25-27 show a sixth embodiment of the emergency lock mechanism. As shown in Figs. 26 and 27, the lock mechanism 80 mainly consists of an upper tooth member 251B extending transversely, an arm 140 including a lower member 240B, a tension spring 254A as a limiting member, and a lower tooth member 250. The lower tooth member 250 is formed with engaging teeth 252 at an upper end, and is secured to the base plate 10 by rivets 130.

The lower member 240B of the arm 140 is secured to the connecting rod 9 by means of the fixing pin 118, and the upper tooth member 251B is pivotably mounted on the link 15 by a pin 121. The upper tooth member 251B has teeth 259B at a lower part and a curved cam surface 253B at an upper part. The teeth 259B face the engaging teeth 252 of the lower tooth member 250. The arm 140 itself is pivotably mounted on the lower member 240B by means of a pivot 141B. The lower member 240B is formed at a central part with an arc-shaped hole 243B centered around the pivot 141B and an indentation 241B at an upper end. The arm 140 is provided with a cam pin 145 extending backward and passing through the arc-shaped hole 243B of the lower member 240B, and with a pin 143 extending backward. The arc-shaped hole 243B and the indentation 241B of the lower member 240B guide the cam pin 145 and the pin 143 of the arm 140 when the arm pivots with respect to the lower member. In a normal position, the cam pin 145 of the arm 140 is positioned at the central part of the arc-shaped hole 243B of the lower member 240B of the arm 140 as shown in Fig. 25.

A holder plate 170 holds the main components of the lock mechanism, on the seat 1. A tension spring 254B is stretched between the holder plate 170 and the upper tooth member 251B, and the upper tooth member 251B is energized to recedes away from the lower tooth member 250.

In the above configuration, the arm 140 including the lower member 240B, the upper tooth member 251B, and the holder plate 170 integrally move with the seatback 4 when the seatback is reclined.

When the arm 140 is subject to an impulsive load which causes the arm to pivot in the clockwise direction A, the cam pin 145 of the arm 140 contacts a portion 253d of the cam surface 253B and presses the upper tooth member 251B downward as shown by actual lines in Fig. 27. As a result, the upper and lower tooth members 251B and 252 engage each other, and the arm 140 is locked with respect to the lower tooth member 250.

When the impulsive load is gone, the arm 140 returns to the normal position, and at the moment, the upper tooth member 251B returns to the original position by means of the spring 254B until a lowest portion 253c of the cam surface 253B contacts the cam pin 145 of the arm 140.

When the arm 140 is subject to an impulsive load which causes the arm to pivot in the counterclockwise direction B, the cam pin 145 of the arm 140 contacts a portion 253e of the cam surface 253B and presses the upper tooth member 251B downward as shown by imaginary lines in Fig. 27. As a result, the upper and lower tooth members 251B and 252 engage each other, and the arm 140 is locked with respect to the lower tooth member 250.

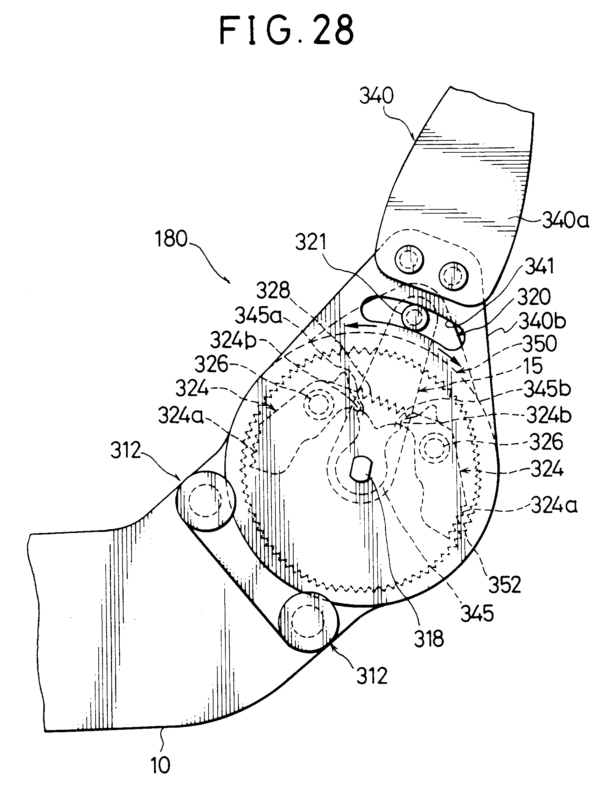

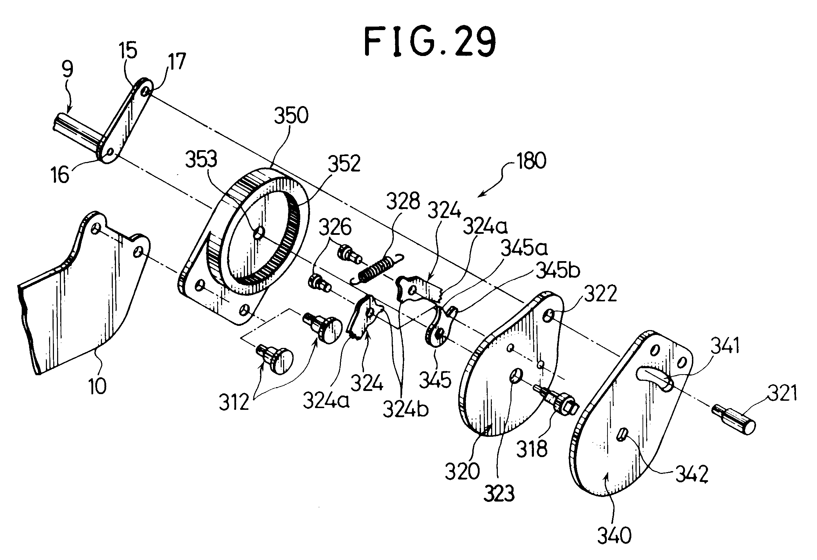

Figs. 28-32 show a seventh embodiment of the emergency lock mechanism. The emergency lock mechanism 180 mainly consists of an upper tooth member 320 including a pair of tooth members 324, 324, an arm 340, and a lower tooth member 350 which is a internal gear, as shown in Figs. 28 and 29.

In Figs. 28 and 29, the upper tooth member 320 has a fixing pin 321 received in its upper hole 322, a central hole 323 and the tooth members 324, 324 pivotably mounted on the upper tooth member 320 itself by means of the pivots 326, 326. Each tooth member 324 is formed with teeth 324a at a lower end and a horn-shaped cam surface 324b at an upper end. A tension spring 328 is stretched between the tooth members 324 and 324, and the tooth members are energized to pivot, centered around the pivots 326, by means of the tension spring 328.

The arm 340 is to be connected to a member 340a which is secured to the hinged side of the seatback. The arm 340 is formed with an arc-shaped hole 341 and a central square hole 342. A pin 318 is attached to the arm 340 through the square hole 342. The arm 340 is superimposed on the upper tooth member 320, while the pin 318 of the arm is inserted in the central hole 323 of the upper tooth member 320. A cam member 345 is secured to a distal end of the pin 318 of the arm 340. The arm 340 itself, the pin 318, and the cam member 345 integrally rotate with respect to the upper tooth member 320. An upper part of the cam member 345 is formed with two horn-shaped cam surfaces 345a, 345b which contact the cam surfaces 324b of the upper tooth member 320.

The lower tooth member 350 has internal teeth 352 and a hole 353 at the center of the internal teeth 352.

The assembly of the upper tooth member 320 and the arm 340 is superimposed on the lower tooth member 350, and the tooth member 324, 324 of the upper tooth member 320 and the cam member 345 connected to the arm 340 are positioned inside the internal teeth 352 of the lower tooth member 350. The teeth 324A of each tooth member 324 face the internal teeth 352 of the lower tooth member 352. The pin 318 is passed through the hole 353 of the lower tooth member 350 and inserted in the hole 16 of the connecting rod 9, and is rotatable in the hole 16.

The lower tooth member 350 is to be secured to the base plate, for example, by a plurality of rivets 312, 312. The upper pin 321 of the upper tooth member 323 is inserted in the hole 17 of the link 15 linked to the connecting rod 9 of the seat reclining device, and the upper tooth member 323 is secured to the locked side 6 (Fig. 1) of the seatback 4. The upper pin 321 of the upper tooth member 320 is normally positioned at the center of the arc-shaped hole 341 of the arm 340. The configuration of the normal position is shown in Fig. 28. In this normal state where the seatback 4 is not subject to an impulsive load, the tooth members 324, 324 are energized to move towards the internal teeth 352, and, however, tips of the horn-shaped cam surfaces 345a, 345b of the acting member 345 contact tips of the horn-shaped cam surfaces 324b, 324b of the tooth member 324, 324, as a result of which the engaging teeth 324a, 324a are prevented from engaging the internal teeth 352 of the lower tooth member 350.

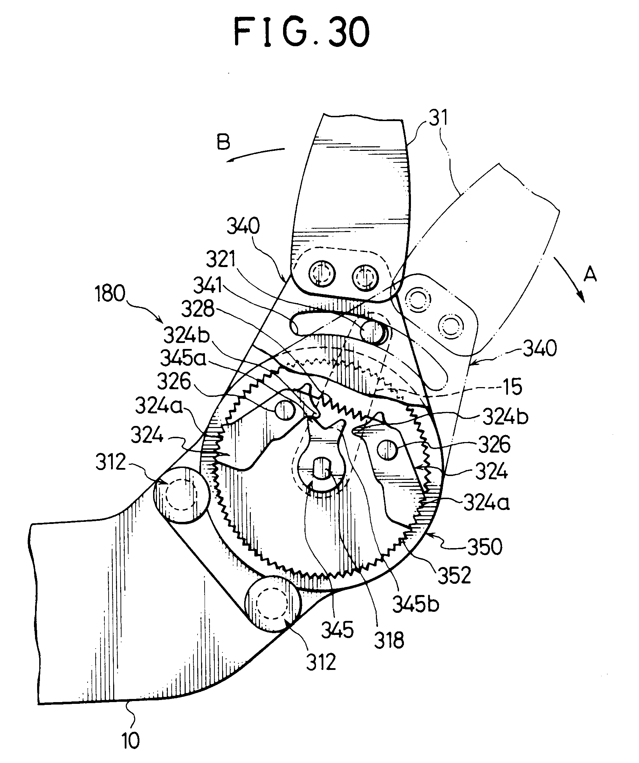

In an emergency that the arm 340 is subject to an impulsive load in the counterclockwise direction B, the arm 340 pivots in the direction B, as shown by actual lines in Fig. 30, and the tips of the cam surfaces 345a, 345b of the acting member 345 are detached from the tips of the cam surfaces 324b, 324b of the tooth member 324, 324 as shown in Fig. 30. As a result, the teeth 324a of the tooth members 324 engage the internal teeth 352 of the lower tooth member 350.

When the impulsive load is gone, the arm 340 returns to the normal position, and the relation between the tips of the acting member 345 and the tooth members 324, 324 returns to the original contact state.

When the arm 340 is subject to an impulsive load in the clockwise direction A, the arm 340 pivots in the direction A as shown by imaginary lines in Fig. 30, and similarly, the teeth 324a of the tooth members 324 engage the internal teeth 352 of the lower tooth member 350.

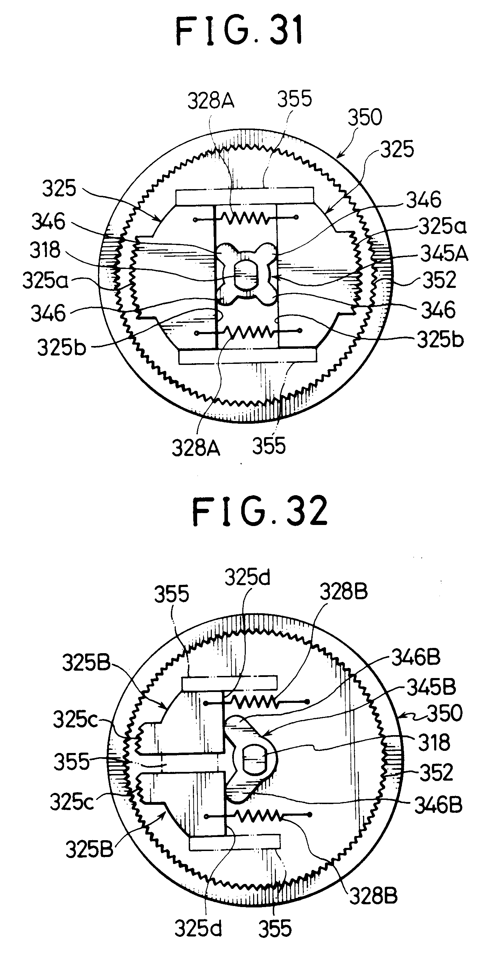

Fig. 31 shows a modified example of the emergency lock mechanism shown in Figs. 28 and 29. A pair of guides 355, 355 is attached to the inside of the internal teeth 352 of the lower tooth member 350. A pair of upper tooth members 325, 325 are disposed inside the internal teeth 352 and guided along the guides 355, 355. Each upper tooth member 325 has outside teeth 325a facing the internal teeth 352 of the lower tooth member 350. A pair of tension spring 328A, 328A are stretched between the upper tooth members 325, 325, and the upper tooth members 325, 325 are energized to recede away from the internal teeth 352 of the lower tooth member 350. A cross-shaped acting member 345A is secured to the arm 340 and has four round ends 346 which cooperate with side surfaces 325b of the upper tooth members 325 to act as a cam. When the arm is subject to am impulsive load in the clockwise or counterclockwise direction, the acting member rotates, and the round ends 346 push the upper tooth members 325 outward against the force of the tension springs 328A until the upper tooth members 325, 325 engage the internal teeth 352 of the lower tooth member 350. When the impulsive load is gone, the round ends 346 rotate and return to the normal positions, while the upper tooth members 325, 325 recede away from the internal teeth 352 by means of the tension springs 328A, 328A.

Fig. 32 shows a further modified example of the emergency lock mechanism shown in Figs. 28 and 29. In this example, a pair of upper tooth members 325B, 325B are disposed inside the internal teeth 352 and guided along the guides 355, 355. Each upper tooth member 325 has outside teeth 325c facing the internal teeth 352 of the lower tooth member 350. A pair of tension spring 328B, 328B are stretched between the upper tooth members 325B, 325B and the lower tooth member 350, and the upper tooth members 325B, 325B are energized to recede away from the internal teeth 352 of the lower tooth member 350. A V-shaped cam member 345B secured to the arm 340 has two upper round ends 346B, 346B which cooperate with side surfaces 325d, 325d of the upper tooth members 325B to act as a cam. When the arm is subject to an impulsive load in the clockwise or counterclockwise direction, the cam member 345B rotates in the direction, and one of the round ends 346B pushes the one upper tooth member 325 outward against the force of the one tension spring 328B until the one upper tooth member 325B engages the internal teeth 352 of the lower tooth member 350. When the impulsive load is gone, the acting member 345B rotates in the opposite direction and returns to the normal positions, while the upper tooth member 325B recedes away from the internal teeth 352 by means of the tension spring 328B.

## Claims

1. An emergency lock mechanism (8, 80, 180) attachable to a vehicular seat of which a seatback (4) is locked at one side by a seat reclining device (2) and hinged at the other side with respect to a seat cushion (5), for locking rotation of the hinged side of the seatback (4) subject to an impulsive load in an emergency, comprising:
a lower tooth member (50, 150, 250, 350) attachable to the seat cushion (5,CF,10) and having engaging teeth (52, 152, 252, 352);
an upper tooth member (20, 251, 251A, 251B, 324, 325, 325B) provided with teeth (22, 258, 259, 259B, 324a, 325a, 325c) for facing and engaging the teeth of the lower tooth member; and
an arm (40, 140, 340) attached to the seatback (4) and rotatably provided with respect to the lower tooth member, characterized in that the lock mechanism further comprises
a limiting member (42, 30, 56, 121, 254B, 345a, 345b, 328A, 328B) disposed adjacent to the upper tooth member, for normally preventing the upper tooth member and the lower tooth member from engaging each other, the limiting member being moved by rotation of the arm (40, 140, 340) in the emergency to allow the upper and lower tooth members to engage each other.

2. The lock mechanism (8) of claim 1, wherein said limiting member (42) is constituted by teeth (42) which are provided in said arm (40) and face the engaging teeth (52) of the lower tooth member (50), each tooth (42) of the arm (40) being normally positioned between the teeth (22) of the upper tooth member (20), and the lower tooth member (50) being energized to press the teeth (52) thereof against the teeth (42, 22) of the arm (40) and the upper tooth member (20), thereby the upper and lower tooth members (20, 50) are normally prevented from engaging each other and allowed to engage each other in the emergency by rotation of the arm (40), which causes the teeth (42) of the arm to superimpose the teeth (22) of the upper tooth member.

3. The lock mechanism (8) of Claim 1, wherein the arm (40) has a cam pin (46), and the limiting member is a cam follower plate (30) formed with a mountain-shaped cam groove (36) which engages the cam pin (46), the cam follower plate (30) being normally positioned between the teeth (22) of the upper tooth member (20) and the teeth (52) of the lower tooth member (50) in order to prevent the upper and lower tooth members (20, 50) from engaging each other and moved in the emergency by means of the cam (36, 46).

4. The lock mechanism (8) of Claim 1, wherein the limiting member is a cam follower plate (30) formed with a mountain-shaped cam groove (36) and connected to the arm (40) through an intermediate link plate (60) provided with a cam pin (61) for engaging the mountain-shaped cam groove (36), the cam follower plate (30) being normally positioned between the teeth (22) of the upper tooth member (20) and the teeth (52) of the lower tooth member (50) in order to prevent the upper and lower tooth members (20, 50) from engaging each other and moved in the emergency by means of the cam (36, 61).

5. The lock mechanism (8) of Claim 1, wherein the arm (40) is provided with a cam groove (46b), and the limiting member is a cam follower plate (30) provided with a pin (36b) for engaging the cam groove (46b), the cam follower plate (30) being normally positioned between the teeth (22) of the upper tooth member (20) and the teeth (52) of the lower tooth member (50) in order to prevent the upper and lower tooth members (20, 50) from engaging each other and moved in the emergency by means of the cam (36b, 46b).

6. The lock mechanism (80) of Claim 1, wherein the upper tooth member (250, 251, 251A) is provided with cam surface (260, 261, 261A) and rotatably mounted on the arm (140), and the limiting member is a cam pin (121) fixed to the locked side of the seatback, for engaging the cam surface (260, 261, 261A) of the upper tooth member (250, 251, 251A), the fixed cam pin (121) normally preventing the upper and lower tooth members (250, 251, 251A, 150) from engaging each other and causing in the emergency the upper tooth member (250, 251, 251A) to rotate and engage the lower tooth member (150).

7. The lock mechanism (180) of Claim 1, wherein the lower tooth member (350) has internal teeth (352), and the upper tooth member (320) and the arm (340) have cam portions (324b, 345a, 345b) for engaging each other, the engaging teeth (324a) and the cam portion (324b) of the upper tooth member (320) and the cam portion (345a, 345b) of the arm (340) being disposed inside the internal teeth (352) of the lower tooth member (350) and normally preventing the upper and lower tooth members (320, 350) from engaging each other and being moved in the emergency by rotation of the arm (340).

8. The lock mechanism (80, 180) of Claim 1, wherein the limiting member (254B, 328A, 328B) energizes the upper tooth member (251B, 325, 325B) to recede away from the lower tooth member (250, 350), and the upper tooth member (251B, 325, 325B) and the arm (140, 340) have cam portions (253B, 145; 346, 325b; 346b, 325d) for engaging each other, thereby the upper tooth member is moved in the emergency by means of the cam and is engaged with the lower tooth member.

9. The lock mechanism (180) of Claim 8, wherein the lower tooth member (350) has internal teeth (352), and the engaging teeth (325a, 325c) and the cam portion (325b, 325d) of the upper tooth member (325, 325B) and the cam portion (346, 346B) of the arm (340) are disposed inside the internal teeth (352) of the lower tooth member (350).

## Patentansprüche

1. Notfall-Verriegelungsmechanismus (8, 80, 180), der an einem Fahrzeugsitz angebracht werden kann, dessen Rückenlehne (4) an einer Seite durch eine Sitz-Neigungsvorrichtung (2) arretiert und an der anderen Seite bezüglich einem Sitzpolster (5) schwenkbar ist, um die Drehung der schwenkbaren Seite der Rückenlehne (4) in Abhängigkeit von einer plötzlichen Last in einem Notfall zu arretieren, mit:
einem unteren Verzahnungselement (50, 150, 250, 350), das am Sitzpolster (5, CF, 10) angebracht werden kann und Rastzähne (52, 152, 252, 352) aufweist;
einem oberen Verzahnungselement (20, 251, 251A, 251B, 324, 325, 325B) mit Zähnen (22, 258, 259, 259B, 324a, 325a, 325c) gegenüber den Zähnen des unteren Verzahnungselementes und in diese eingreifend; und
einem Arm (40, 140, 340), der an der Rückenlehne (4) angebracht und hinsichtlich des unteren Verzahnungselementes drehbar ausgeführt ist,
dadurch gekennzeichnet, daß der Verriegelungsmechanismus des weiteren ein Sperrelement (42, 30, 56, 121, 254B, 345a, 345b, 328A, 328B) aufweist, das neben dem oberen Verzahnungselement angeordnet ist, um im Normalfall den gegenseitigen Eingriff des oberen und unteren Verzahnungselementes zu verhindern, wobei das Sperrelement im Notfall durch eine Drehung des Arms (40, 140, 340) bewegt wird, um den gegenseitigen Eingriff des oberen und unteren Verzahnungselementes zu gestatten.

2. Verriegelungsmechanismus (8) nach Anspruch 1, bei dem das Sperrelement (42) aus Zähnen (42) besteht, die im Arm (40) vorgesehen sind und den Rastzähnen des unteren Verzahnungselementes (50) gegenüberliegen, wobei jeder Zahn (42) des Arms (40) normalerweise zwischen den Zähnen (22) des oberen Verzahnungselements (20) positioniert ist, und das untere Verzahnungselement (50) vorgespannt ist, so daß es die Zähne (52) gegen die Zähne (42, 22) des Arms (40) und des oberen Verzahnungselements (20) preßt, wodurch die normalerweise an einem gegenseitigen Eingriff gehinderten oberen und unteren Verzahnungselemente im Notfall durch Drehen des Arms (40), so daß die Zähne (42) des Arms mit den Zähnen (22) des oberen Verzahnungselements deckungsgleich sind, in Eingriff gebracht werden können.

3. Verriegelungsmechanismus (8) nach Anspruch 1, bei dem der Arm (40) einen Zapfen (46) hat und das Sperrelement eine zapfengeführte Platte (30) mit einer dachförmigen Zapfenführung (36) ist, in die der Zapfen (46) eingreift, wobei die zapfengeführte Platte (30) normalerweise zwischen den Zähnen (22) des oberen Verzahnungselements (20) und den Zähnen (52) des unteren Verzahnungselements (50) positioniert ist, um das obere und das untere Verzahnungselement (20, 50) am gegenseitigen Eingriff zu hindern, und im Notfall mittels des Zapfens (36, 46) bewegt wird.

4. Verriegelungsmechanismus (8) nach Anspruch 1, bei dem das Sperrelement eine zapfengeführte Platte (30) mit einer dachförmigen Zapfenführung (36) ist, die über eine Zwischenplatte (60) mit einem Zapfen (61) für den Eingriff in die dachförmige Zapfenführung (36) mit dem Arm (40) verbunden ist, wobei die zapfengeführte Platte (30) normalerweise zwischen den Zähnen (22) des oberen Verzahnungselements (20) und den Zähnen (52) des unteren Verzahnungselements (50) positioniert ist, um das obere und das untere Verzahnungselement (20, 50) am gegenseitigen Eingriff zu hindern, und im Notfall mittels des Zapfens (36, 61) bewegt wird.

5. Verriegelungsmechanismus (8) nach Anspruch 1, bei dem der Arm (40) mit einer Zapfenführung (46b) versehen ist und das Sperrelement eine zapfengeführte Platte (30) mit einem Zapfen (36b) zum Eingriff in der Zapfenführung (46b) ist, wobei die zapfengeführte Platte (30) normalerweise zwischen den Zähnen (22) des oberen Verzahnungselements (20) und den Zähnen (52) des unteren Verzahnungselements (50) positioniert ist, um das obere und das untere Verzahnungselement (20, 50) am gegenseitigen Eingriff zu hindern, und im Notfall mittels des Zapfens (36b, 46b) bewegt wird.

6. Verriegelungsmechanismus (80) nach Anspruch 1, bei dem das obere Verzahnungselement (250, 251, 251A) mit einer Zapfenfläche (260, 261, 261A) versehen und drehbar am Arm (140) gelagert ist, und das Sperrelement ein an der arretierten Seite der Sitzrückenlehne befestigter Zapfen (121) für den Eingriff in die Zapfenfläche (260, 261, 261A) des oberen Verzahnungselements (250, 251, 251A) ist, wobei der feste Zapfen (121) normalerweise das obere und untere Verzahnungselement (250, 251, 251A, 150) am gegenseitigen Eingriff hindert und im Notfall eine Drehung des oberen Verzahnungselements (250, 251, 251A) und dessen Eingriff in das untere Verzahnungselement (150) bewirkt.

7. Verriegelungsmechanismus (180) nach Anspruch 1, bei dem das untere Verzahnungselement (350) eine Innenverzahnung (352) und das obere Verzahnungselement (320) und der Arm (340) Zapfenabschnitte (324b, 345a, 345b) für den gegenseitigen Eingriff haben, wobei die Rastzähne (324a) und der Zapfenabschnitt (324b) des oberen Verzahnungselements (320) und der Zapfenabschnitt (345a, 345b) des Arms (340) in der Innenverzahnung (352) des unteren Verzahnungselementes (350) angeordnet sind und normalerweise das obere und untere Verzahnungselement (320, 350) am gegenseitigen Eingriff hindern, und im Notfall mittels des Zapfens (36b, 46b) bewegt werden.

8. Verriegelungsmechanismus (80, 180) nach Anspruch 1, bei dem das Sperrelement (254B, 328A, 328B) das obere Verzahnungselement (251B, 325, 325B) so vorspannt, daß es sich gegenüber dem unteren Verzahnungselement (250, 350) zurückzieht, und das obere Verzahnungselement (251B, 325, 325B) und der Arm (140, 340) Zapfenabschnitte (253B, 145; 346, 325b; 346b, 325d) für den gegenseitigen Eingriff haben, wodurch das obere Verzahnungselement im Notfall mittels des Zapfens bewegt wird und mit dem unteren Verzahnungselement in Eingriff kommt.

9. Verriegelungsmechanismus (180) nach Anspruch 8, bei dem das untere Verzahnungselement (350) eine Innenverzahnung (352) hat, und die Rastzähne (325a, 325c) und der Zapfenabschnitt (325b, 325d) des oberen Verzahnungselementes (325, 325B) sowie der Zapfenabschnitt (346, 346B) des Arms (340) innerhalb der Innenverzahnung (352) des unteren Verzahnungselementes (350) angeordnet sind.

## Revendications

1. Mécanisme de blocage de secours (8, 80, 180) susceptible d'être attaché à un siège de véhicule dont un dossier (4) est bloqué sur un côté par un dispositif d'inclinaison de siège (2) et qui est articulé de l'autre côté par rapport à un coussin de siège (5), pour bloquer la rotation du côté articulé du dossier (4) soumis à une charge par impulsion en cas de secours, comprenant :
- un élément denté inférieur (50, 150, 250, 350) susceptible d'être attaché au coussin de siège (5, CF, 10) et comportant des dents d'engagement (52, 152, 252, 352);
- un élément denté supérieur (20, 251, 251A, 251B, 324, 325, 325B) pourvu de dents (22, 258, 259, 259B, 324a, 325a, 325c) pour faire face et engager les dents de l'élément denté inférieur ; et
- un bras (40, 140, 340) attaché au dossier (4) et prévu en rotation par rapport à l'élément denté inférieur, caractérisé en ce que le mécanisme de blocage comprend en outre :
- un élément de limitation (42, 30, 56, 121, 254B, 345a, 345b, 328A, 328B) disposé adjacent à l'élément denté supérieur, pour empêcher normalement l'élément denté supérieur et l'élément denté inférieur de s engager l'un l'autre, l'élément de limitation étant déplacé par rotation du bras (40, 140, 340) en cas de secours pour permettre à l'élément denté supérieur et l'élément denté inférieur de s'engager l'un l'autre.

2. Mécanisme de blocage selon la revendication 1, dans lequel ledit élément de limitation (42) est constitué par des dents (42) qui sont prévues dans ledit bras (40) et font face aux dents d'engagement (52) de l'élément denté inférieur (50), chaque dent (42) du bras (42) étant normalement placée entre les dents (22) de l'élément denté supérieur (20), et l'élément denté inférieur (50) étant actionné pour presser ses dents (52) contre les dents (42, 22) du bras (40) et de l'élément denté supérieur (20), grâce à quoi les éléments dentés supérieur et inférieur (20, 50) sont normalement empêchés de s'engager l'un l'autre, et il leur est permis de s'engager l'un l'autre en cas de secours par rotation du bras (40), ce qui amène les dents (42) du bras à se superposer aux dents (22) de l'élément denté supérieur.

3. Mécanisme de blocage (8) selon la revendication 1, dans lequel le bras (40) présente une tige à came (46), et l'élément de limitation est une plaque suiveuse de came (30) formée avec une gorge de came en forme de bosse (36) qui engage la tige à came (46), la plaque suiveuse de came (30) étant normalement positionnée entre les dents (22) de l'élément denté supérieur (20) et les dents (52) de l'élément denté inférieur (50) afin d'empêcher à l'élément denté supérieur et l'élément denté inférieur (20, 50) de s'engager l'un l'autre, et étant déplacée en cas de secours au moyen de la came (36, 46).

4. Mécanisme de blocage (8) selon la revendication 1, dans lequel l'élément de limitation est une plaque suiveuse de came (30) formée avec une gorge de came en forme de bosse (36) et connectée au bras (40) via une plaque de liaison intermédiaire (60) pourvue d'une tige à came (61) pour engager la gorge de came en forme de bosse (36), la plaque suiveuse de came (30) étant normalement positionnée entre les dents (22) de l'élément denté supérieur (20) et les dents (52) de l'élément denté inférieur (50) afin d'empêcher à l'élément denté supérieur et l'élément denté inférieur (20, 50) de s'engager l'un l'autre, et étant déplacée en cas de secours au moyen de la came (36, 61).

5. Mécanisme de blocage (8) selon la revendication 1, dans lequel le bras (40) est pourvu d'une gorge de came (46b), et l'élément de limitation est une plaque suiveuse de came (30) pourvue d'une tige (36b) pour engager la gorge de came (46b), la plaque suiveuse de came (30) étant normalement positionnée entre les dents (22) de l'élément denté supérieur (20) et les dents (52) de l'élément denté inférieur (50) afin d'empêcher à l'élément denté supérieur et l'élément denté inférieur (20, 50) de s'engager l'un l'autre, et étant déplacée en cas de secours au moyen de la came (36b, 46b).

6. Mécanisme de blocage (80) selon la revendication 1, dans lequel l'élément denté supérieur (250, 251, 251A) est pourvu d'une surface de came (260, 261, 261A) et est monté en rotation sur le bras (140), l'élément de limitation étant une tige à came (121) fixée sur le côté bloqué du dossier afin d'engager la surface de came (260, 261, 261A) de l'élément denté supérieur (250, 251, 251A), la tige came fixe (121) empêchant normalement à l'élément denté supérieur et l'élément denté inférieur (250, 251, 251A, 150) de s'engager l'un l'autre, et amenant en cas de secours l'élément denté supérieur (250, 251, 251A) à tourner et engager l'élément denté inférieur (150).

7. Mécanisme de blocage (180) selon la revendication 1, dans lequel l'élément denté inférieur (350) comporte des dents intérieures (352), et l'élément denté supérieur (320) ainsi que le bras (340) présentent des parties de came (324b, 345a, 345b) pour s'engager l'un l'autre, les dents d'engagement (324a) ainsi que la partie de came (324d) de l'élément denté supérieur (320) et la partie de came (345a, 335b) du bras (340) étant disposés à l'intérieur des dents intérieures (352) de l'élément denté intérieur (350) et empêchant normalement à l'élément denté supérieur et l'élément denté inférieur (320, 350) de s'engager l'un l'autre, et étant dans déplacés en cas de secours par rotation du bras (340).

8. Mécanisme de blocage (80, 180) selon la revendication 1, dans lequel l'élément de limitation (254B, 328A, 328B) actionne l'élément denté supérieur (251B, 325, 325B) pour se reculer en éloignement de l'élément denté inférieur (250, 350), et l'élément denté supérieur (251B, 325, 325B) ainsi que le bras (140, 340) présentent des parties de came (253B, 145 ; 346, 325b ; 346b, 325d) pour s'engager l'un l'autre, grâce à quoi l'élément denté supérieur est déplacé en cas de secours au moyen de la came, et il est engagé avec l'élément denté inférieur.

9. Mécanisme de blocage (180) selon la revendication 8, dans lequel l'élément denté inférieur (350) comporte des dents intérieures (352), et les dents d'engagement (325a, 325c) ainsi que la partie de came (325b, 325d) de l'élément denté supérieur (325, 325B) et la partie de came (346, 346 B) du bras (340) sont disposés à l'intérieur des dents intérieures (352) de l'élément denté inférieur (350).
